# EUROPÄISCHE PATENTSCHRIFT

(11) **EP 0 906 939 B1**
(45) Veröffentlichungstag und Bekanntmachung des Hinweises auf die Patenterteilung: **16.05.2001**
(21) Anmeldenummer: 98117044.2
(22) Anmeldetag: 09.09.1998
(51) Int. Cl.: C09C 1/00, C04B 41/86, C03C 8/14, C03C 8/18

(54) **Verfahren zur Herstellung von Geschirrdekoren mit erhöhter Widerstandsfähigkeit gegen Besteckabriebspuren**
Process for the preparation of decorations on kitchen utensils with improved resistance against abrasion by cutlery
Procédé pour la préparation de décors présentant une résistance améliorée à l'abrasion par des couverts

(30) Priorität: 04.10.1997 DE 19743852
(43) Veröffentlichungstag der Anmeldung: 07.04.1999
(73) Patentinhaber: dmc2 Degussa Metals Catalysts Cerdec AG, 60287 Frankfurt am Main (DE)
(72) Erfinder: Huber, Adalbert, Dr., 63225 Langen (DE); Speer, Dietrich, Dr., 63505 Langenselbold (DE); Wachowitz, Gabriele, 63128 Dietzenbach (DE); Jarnicki, Holger, 65558 Eppenrod (DE)

(56) Entgegenhaltungen:
- EP-A- 0 863 187
- DE-A- 4 411 104
- DE-C- 3 719 051
- LEHNHÄUSER W ET AL: "Beeinflussung der Glasurfärbung durch Zeolith" KERAMISCHE ZEITSCHRIFT, Bd. 40, Nr. 7, Juli 1988, Seiten 493-497, XP002089333

## Beschreibung

Die Erfindung betrifft ein Verfahren zur Herstellung von farbigen Geschirrdekoren, welche eine erhöhte Widerstandsfähigkeit gegen die Ausbildung von Besteckabriebsspuren aufweist.

Die Herstellung von farbigen Dekoren auf keramischen Materialien, wie zum Beispiel Geschirr aus Steingut, Bone China und Porzellan, ist an sich bekannt (siehe Ullmann's Enzyklopädie der technischen Chemie, 4. Auflage, Band 14 (1977), Seiten 9-10). Mittels unterschiedlichster Applikationstechniken, wie Malen, Tauchen, Spritzen, insbesondere aber direktes oder indirektes Bedrucken, wird eine Dekorfarbe in Form des Dekors auf das zu dekorierende Material aufgebracht und dann eingebrannt.

Die Dekorfarbe besteht im wesentlichen aus einer farbgebenden Komponente, üblicherweise einem Pigment, und einem Glasfluß aus üblicherweise einer oder mehreren Glasfritten. Bei Geschirrdekoren ist zwischen einer Aufglasur- und Inglasurdekoration zu unterscheiden: Im allgemeinen wird nach dem Glasurbrand auf das zu dekorierende Geschirrteil mittels Direktdruck oder Indirektdruck (Abziehbildtechnik) das Dekor aufgetragen und dann eingebrannt - im Falle einer Aufglasurdekoration entweder im Normalbrand bei etwa 780 bis 900 °C oder im Hochtemperaturschnellbrand bei über 900 °C bis etwa 1100 °C und im Falle einer Inglasurdekoration bei einer Temperatur im Bereich von etwa 1100 bis 1250 °C.

Porzellangeschirr, insbesondere Hotelporzellan, ist hohen Beanspruchungen durch alkalisches Spülwasser von Spülmaschinen und durch Besteckeinwirkung im Gebrauch ausgesetzt. Durch Besteckeinwirkung auf dekorierten Geschirrteilen kommt es zu grauen Abriebsspuren, welche den ästhetischen Eindruck stören. Derartige Abriebsspuren vom Metallbesteck sind insbesondere bei vom Markt zunehmend gewünschten großflächigen Dekoren störend. Das Problem konnte bisher nur teilweise durch eine Inglasurdekoration, wobei das Dekor beim Brand teilweise in die Glasurschicht einsinkt, gelöst werden.

Aufgabe der Erfindung ist demgemäß, Wege aufzuzeigen, die Widerstandsfähigkeit von Dekoren gegen Besteckabriebsspuren zu erhöhen.

Gefunden wurde ein Verfahren zur Herstellung von Geschirrdekoren mit erhöhter Widerstandsfähigkeit gegen Besteckabriebsspuren, umfassend Aufbringen einer eine farbgebende Komponente und einen Glasfluß enthaltenden Dekorfarbe auf das Geschirr und Einbrennen des Dekors, das dadurch gekennzeichnet ist, daß man als farbgebende Komponente ein mit mindestens einem Metall aus der Reihe V, Cr, Mn, Fe, Co, Ni, Cu, Zn, Ag, Au, Ru, Rh, Pd, Os, Ir, Pt und/oder einem Ion oder einer Verbindung des Metalls beladenes Molekularsieb verwendet und das Dekor unter Bedingungen einbrennt, unter welchen das Molekularsieb Bestandteil des Glasflusses wird.

Bei den zur Problemlösung zu verwendenden Dekorfarben handelt es sich insbesondere um solche, wie sie in der DE-Patentanmeldung 197 09 100.8 beschrieben sind. Die gesamte Offenbarung der genannten DE 197 09 100.8 wird in die vorliegende Erfindung einbezogen.

Gemäß einer bevorzugten Ausführungsform wird als farbgebende Komponente ein im wesentlichen mit einem Metall aus der Reihe Gold, Palladium, Platin und Kupfer beladenes Molekularsieb verwendet. Der Begriff "im wesentlichen" bedeutet, daß zusätzlich zu dem farbgebenden Metall in geringem Umfang ein oder mehrere farbtonmodifizierende Metalle, Metallionen oder Metallverbindungen aus der Reihe V, Cr, Mn, Fe, Co, Ni, Zn, Ag, Cu sowie der Edelmetalle anwesend sein können. Besonders bevorzugt werden Dekorfarben für pinkfarbene (purpurfarbene) Dekore verwendet, wobei die farbgebende Komponente der Dekorfarbe ein elementares Gold oder eine Goldverbindung enthaltendes Molekularsieb, das zur Farbmodifizierung, zum Beispiel einer Rotverschiebung, zusätzlich Silber oder eine Silberverbindung enthalten kann, ist. Für graue Dekore wird vorzugsweise ein Palladium enthaltendes Molekularsieb eingesetzt.

Die farbgebende Komponente kann in der Dekorfarbe bereits die endgültige Dekorfarbe aufweisen, etwa purpurfarben im Falle der Anwesenheit von kolloidalem Gold, oder die Farbe bildet sich erst beim Brand aus einer Vorstufe der Farbe, etwa durch thermische Zersetzung einer Goldverbindung. Soweit das Molekularsieb eines oder mehrerer der gattungsgemäßen Metalle in ionischer Form gebunden oder in Form von Metallverbindungen adsorbiert enthält, welche beim Brand nicht zu den Metallen zersetzt werden, können sich daraus beim Brand auch Pigmente mit einer Primärpartikelgröße weit unterhalb der üblichen Größe bilden. Derartige Pigmente sind so fein, daß sie kaum zur Entstehung von Besteckabriebsspuren beitragen.

Bei den Molekularsieben als Träger für das farbgebende Metall, Metallion oder Metallverbindung handelt es sich vorzugsweise um Alumosilikate, insbesondere Alumosilikate mit einem SiO₂/Al₂O₃-Modul von 10 bis 100, wie ZSM 5 oder Zeolith-Beta, aluminiumarme oder -freie Silikalite, titanhaltige Silikalite, wie TS-1, TS-2 oder Ti-Beta-Zeolith, Ferrosilikate und mesoporöse Silikate.

Das Aufbringen des Dekors auf das Geschirr umfaßt bekannte Maßnahmen, nämlich das Anpasten der Dekorfarbe, den Druck und den Brand. Vorzugsweise wird das Dekor auf glasiertes Porzellan aufgebracht und bei einer Temperatur im Bereich von 1000 bis 1250 °C, insbesondere 1100 bis 1250 °C, eingebrannt.

Die erfindungsgemäß bewirkte Erhöhung der Widerstandsfähigkeit gegen Besteckabriebsspuren wird darauf zurückgeführt, daß auf der Oberfläche des eingebrannten Dekors keine oder nur äußerst kleine und damit wenig abriebswirksame Pigmentkristalle, die aufgrund ihrer Härte und damit Schleifwirkung für die Besteckabriebsspuren verantwortlich sind, herausragen. Die Teilchengröße der farbgebenden Stoffe im eingebrannten Dekor, vorzugsweise also der Edelmetalle aus der Reihe Au, Pd, Pt und Cu, liegt im Nanometerbereich und ist damit nicht mehr abriebswirksam. Die Gerüststruktur des Molekularsiebs bricht beim Aufschmelzprozeß des Dekors beim Brand zusammen und bildet einen Bestandteil des Glasflusses. Damit ragen keine Abrieb verursachenden diskreten Kristalle der farbgebenden Komponente der eingesetzten Dekorfarbe aus der Oberfläche des Dekors. Wie aus den Vergleichsversuchen hervorgeht, führen erfindungsgemäß zu verwendende Dekorfarben in wesentlich geringerem Umfang zu Besteckabriebsspuren als die Verwendung von Dekorfarben gleicher oder ähnlicher Farbe auf der Basis üblicher Farbpigmente.

### Beispiele - allgemeine Vorschriften

Die zu untersuchenden Testplatten wurden wie folgt hergestellt:
1. Aufmahlen der Dekorfarbe in einem Ethanol/Acetongemisch in einer Bloch-Rosetti-Mühle - 120 Minuten, 50 g Mahlgut, 150 g Mahlkugeln.
2. Anpasten der Dekorfarbe in einem Druckmedium (Nr. 80820 der Cerdec AG) - 10 Gew.-teile Dekorfarbe und 6 Gew.-teile Medium.
3. Drucken auf Abziehbildpapier mittels 100er Nylonsieb; überfilmen.
4. Dekorieren von Porzellantellern mittels Abziehbildern.
5. Brennen: Durchschubofen, 90 Minuten, 1140 °C beziehungsweise 1220 °C.

Geprüft wurden (i) die Spülmaschinenbeständigkeit und (ii) die Widerstandsfähigkeit gegen Besteckabrieb (Abriebstest) :
(i): 500 Spülzyklen nach DIN 50275 unter Verwendung eines Reinigers gemäß DIN 44990. Bewertung: 5 = keine Glanzminderung, 4 = geringe Glanzminderung, 3 = leicht matt glänzend, 2 = matt glänzend, 1 = steinmatt, glanzlos.
(ii): Die Klinge eines Chromstahlmessers (18 % Cr) wird 5mal flach schabend über die Dekorfläche geführt; Art und Stärke des Metallabriebs werden bewertet: 5 = keine Abriebsspuren, 4 = abwischbare Abriebsspuren, 3 = durch Abwischen nicht vollständig entfernbare Abriebsspuren, 2 = starke, nicht entfernbare Abriebsspuren, 1 = sehr starke, nicht entfernbare Abriebsspuren.

### Beispiel 1 (B1) und Vergleichsbeispiel 1 (VB1)

Eingesetzt wurde in B1 eine Dekorfarbe auf der Basis einer bleihaltigen Glasfritte (Nr. 90369 der Cerdec AG) und eines goldhaltigen Zeoliths (ZSM 5). Die Pigmentvolumenkonzentration der Dekorfarbe (PVK) betrug 50 %.

In VB1 enthielt die Dekorfarbe eine bleihaltige Glasfritte (Nr. 90234 der Cerdec AG) als Fluß und ein Zinn-Antimon-Mischoxid mit mittlerer Korngröße d₅₀ = 0,8 µm und d₉₀ = 2,8 µm als farbgebende Komponente; PVK 40 %. Die Ergebnisse folgen aus der Tabelle.

| | B 1 | | VB 1 | |
|---|---|---|---|---|
| Brenntemperatur (°C) | 1140 | 1220 | 1140 | 1220 |
| Farbe | grau | | grau | |
| Spülmaschinenbeständigkeit | 2,5 | 2,5 | 1,5 | 1,5 |
| Abriebsspuren | 2,5 | 2,5 | 2 | 2 |

Durch Verwendung einer anspruchsgemäßen grauen Dekorfarbe anstelle einer ein konventionelles graues Pigment enthaltenden Dekorfarbe konnte die Widerstandsfähigkeit gegen Besteckabriebsspuren erhöht werden.

### Beispiel 2 (B2) und Vergleichsbeispiel 2 (VB2)

Eingesetzt wurden jeweils pinkfarbene Dekorfarben - in B2 a) bis c) jeweils eine Farbe mit einem kolloidales Gold enthaltenden Zeolith (ZSM 5), in VB2 ein chromdotiertes CaSnSiO₅ (d₅₀ ca. 4 µm). Die Zusammensetzung und Ergebnisse folgen aus der Tabelle.

| Beispiel Nr. | B 2 | | | VB 2 | |
|---|---|---|---|---|---|
| | a | b | c | | |
| PMK | 17 | 34 | 34 | 40 | |
| Fluß (Nr. der Cerdec AG) | 90295 | 90234 | 90347 | 90369 | |
| Spülmaschinenbeständigkeit | 3,5/3,5 | 2/2 | 3/3,5 | 2 | 2 |
| Abriebsspuren ∗) | 5/4,5 | 4/4,5 | 3/4,5 | 3 | 2 |

| | | | | | |
|---|---|---|---|---|---|
| ∗) Werte nach Brand bei 1140 °C / 1220 °C | | | | | |

### Beispiele 3 a) und b) und Vergleichsbeispiel 3 a) und b)

Eingesetzt wurden graue Dekorfarben mit den in der Tabelle angegebenen Flüssen und Pigmentvolumenkonzentration (PVK). Die Tabelle enthält zudem die Ergebnisse der Abriebtests (Durchschnittswerte aus 3 Bestimmungen), wobei die Testbedingungen gegenüber der allgemeinen Vorschrift zwecks besserer Reproduktion geändert wurden. Eingebrannt wurde jeweils im Durchschubofen bei 1180 °C, 90 Minuten.

| Nr. | B 3a) | B 3b) | VB 3a) | VB 3b) |
|---|---|---|---|---|
| Farbgebende Komponente | Pd-Zeolith (ZSM 5) | | Zinn-Antimon-Mischoxid | |
| Fluß (Nr. der Cerdec AG) | 90234 | 90369 | 90234 | 90369 |
| PVK (%) | 28 | 47 | 28 | 47 |
| Abriebstest ∗) | 4,3 | 4,5 | 3,0 | 3,0 |

| | | | | |
|---|---|---|---|---|
| ∗) Der Abriebtest wurde mittels eines runden WMF-Messers mit 20 Umdrehungen/Minuten bei schiebender Vorwärtsbewegung, einem Winkel von 45° und einem Gewicht von 120 g durchgeführt. Die Bewertung entspricht jener der allgemeinen Vorschrift. | | | | |

### Beispiel 4 (B4)

Eine Dekorfarbe aus 63 Gew.-% einer bleihaltigen Glasfritte (Nr. 90369 der Cerdec AG) und 47 Gew.-% eines goldhaltigen Zeoliths wurden getestet. Die PVK betrug 54 %. Nach der Anpastung und dem Brand bei 1180 °C / 90 Minuten auf einem Porzellanteller wurde der Abriebstest gemäß Beispiel 3 durchgeführt. Die Bewertung des Abriebstests betrug 5,0.

## Patentansprüche

1. Verfahren zur Herstellung von Geschirrdekoren mit erhöhter Widerstandsfähigkeit gegen Besteckabriebsspuren, umfassend Aufbringen einer eine farbgebende Komponente und einen Glasfluß enthaltenden Dekorfarbe auf das Geschirr und Einbrennen des Dekors,
dadurch gekennzeichnet,
daß man als farbgebende Komponente ein mit mindestens einem Metall aus der Reihe V, Cr, Mn, Fe, Co, Ni, Cu, Zn, Ag, Au, Ru, Rh, Pd, Os, Ir, Pt und/oder einem Ion oder einer Verbindung des Metalls beladenes Molekularsieb verwendet und das Dekor unter Bedingungen einbrennt, unter welchen das Molekularsieb Bestandteil des Glasflusses wird.

2. Verfahren nach Anspruch 1,
dadurch gekennzeichnet,
daß man als farbgebende Komponente ein im wesentlichen mit einem Metall aus der Reihe Au, Pd, Pt und Cu beladenes Molekularsieb verwendet.

3. Verfahren nach Anspruch 1 oder 2,
dadurch gekennzeichnet,
daß man das Dekor auf glasiertes Porzellan aufbringt und bei einer Temperatur im Bereich von mindestens 1000 bis 1250 °C einbrennt.

4. Verfahren nach Anspruch 1 oder 2,
dadurch gekennzeichnet,
daß man das Dekor bei einer Temperatur im Bereich von 1000 bis 1250 °C einbrennt.

## Claims

1. A method of producing crockery decorations with elevated resistance to cutlery abrasion, comprising application of a decorative colorant containing a chromophoric component and a glass flux to the crockery and stoving of the decoration,
characterised in that
a molecular sieve loaded with at least one metal from the series V, Cr, Mn, Fe, Co, Ni, Cu, Zn, Ag, Au, Ru, Rh, Pd, Os, Ir, Pt and/or an ion or a compound of the metal is used as the chromophoric component and the decoration is stoved under conditions, under which the molecular sieve becomes a constituent of the glass flux.

2. A method according to claim 1,
characterised in that
a molecular sieve substantially loaded with a metal from the series Au, Pd, Pt and Cu is used as the chromophoric component.

3. A method according to claim 1 or claim 2,
characterised in that
the decoration is applied to glazed porcelain and stoved at a temperature in the range of from at least 1000 to 1250 °C.

4. A method according to claim 1 or claim 2,
characterised in that
the decoration is stoved at a temperature in the range of from 1000 to 1250 °C.

## Revendications

1. Procédé de production de décors de vaisselle à capacité de résistance accrue aux traces d'usure de couverts, comprenant le dépôt d'une couleur décorative contenant un composant colorant et un fluor minéral sur la vaisselle, et la cuisson du décor,
caractérisé en ce qu'
on utilise comme composant colorant un tamis moléculaire chargé avec au moins un métal de la série V, Cr, Mn, Fe, Co, Ni, Cu, Zn, Ag, Au, Ru, Rh, Pd, Os, Ir, Pt et/ou un ion ou un composé du métal, et en ce qu'on cuit le décor dans des conditions dans lesquelles le tamis moléculaire devient un composant du fluor minéral.

2. Procédé selon la revendication 1,
caractérisé en ce qu'
on utilise comme composant colorant un tamis moléculaire essentiellement chargé avec un métal de la série Au, Pd, Pt et Cu.

3. Procédé selon la revendication 1 ou 2,
caractérisé en ce qu'
on dépose le décor sur la porcelaine vernissée et en ce qu'on le fait cuire à une température comprise entre au moins 1000 et 1250°C.

4. Procédé selon la revendication 1 ou 2,
caractérisé en ce qu'
on fait cuire le décor à une température comprise entre 1000 et 1250°C.
